# EUROPEAN PATENT SPECIFICATION

(11) **EP 4 084 988 B1**
(45) Date of publication and mention of the grant of the patent: **11.11.2026**
(21) Application number: 19835425.0
(22) Date of filing: 30.12.2019
(51) Int. Cl.: B60L 50/64, B60L 50/60, B60L 58/16, H01M 10/613

(54) **MODULAR ELECTRICAL ENERGY STORAGE SYSTEM STRUCTURE, A METHOD FOR PROVIDING ELECTRICAL ENERGY TO AN ELECTRICAL MOTOR OF A VEHICLE AND A VEHICLE COMPRISING AN ELECTRICAL MOTOR AND THE MODULAR ELECTRICAL ENERGY STORAGE SYSTEM STRUCTURE**
MODULARES ELEKTRISCHES ENERGIESPEICHERSYSTEMSTRUKTUR, EINE METHODE ZUR BEREITSTELLUNG ELEKTRISCHER ENERGIEFPR EINEN ELEKTROMOTOR EINES FAHRZEUGS UND EIN FAHRZEUG BEINHALTEND EINEN ELEKTRISCHEN MOTOR UND EINE MODULARE EBERGIESPEICHERSYSTEMSTRUKTUR
STRUCTURE DE SYSTÈME DE STOCKAGE D'ÉNERGIE ÉLECTRIQUE MODULAIRE, PROCÉDÉ PERMETTANT DE FOURNIR DE L'ÉNERGIE ÉLECTRIQUE À UN MOTEUR ÉLECTRIQUE D'UN VÉHICULE ET VÉHICULE COMPRENANT UN MOTEUR ÉLECTRIQUE ET LA STRUCTURE DE SYSTÈME DE STOCKAGE D'ÉNERGIE ÉLECTRIQUE MODULAIRE

(43) Date of publication of application: 09.11.2022
(73) Proprietor: VOLVO TRUCK CORPORATION, 405 08 Göteborg (SE)
(72) Inventor: SVENSSON, Jonatan, 431 34 Mölndal (SE); RAGOT, Sebastien, 413 11 Göteborg (SE)
(74) Representative: Kransell & Wennborg KB
(86) International application number: PCT/EP2019/087132
(87) International publication number: WO 2021/136579

(56) References cited:
- US-A1- 2018 050 607
- US-A1- 2019 061 505
- US-A1- 2019 148 690

## Description

### TECHNICAL FIELD

The invention relates to a modular electrical Energy Storage System structure for powering an electric motor in an electric vehicle. The invention also relates to a method for providing electrical energy to an electric motor of a vehicle and an electrical vehicle comprising an electric motor and comprising the modular electrical Energy Storage System structure.

The invention can be applied in cargo transport vehicles, such as for providing drive power in towing truck and semi-trailer combinations, in trucks, buses, recreational vehicles and construction equipment.

### BACKGROUND

Electrically powered cargo transport vehicles require an electrical energy source, i.e. an electrical energy storage system, which is capable of delivering the required power and which has sufficient energy capacity. Different types of cargo transport vehicles have different requirements on power and energy capacity of the electrical energy storage system. Some vehicles targeted at long-haul transport of heavy goods may require a larger electrical energy storage system compared to smaller vehicles which are used on shorter routes.

Vehicles for cargo transport often differ in terms of, e.g., wheel base dimension, axle configuration and load capacity. The available space for efficiently mounting battery systems is therefore different between different vehicle types. US2019148690A1 discloses a battery assembly for attachment to a vehicle chassis. US20190061505A1 discloses an apparatus for storing electric energy for a motor vehicle, comprising a plurality of energy storage modules arranged on a main body configured to be fastened to the motor vehicle. US20180050607A1 discloses a battery support structure for an electric or hybrid vehicle, the battery support structure being configured to support one or more battery packs and to be attached to a vehicle frame.

To cope with these different requirements, one or several extra electrical energy storage modules can be mounted on vehicles to increase the energy capacity as needed. However, this causes a significant increase in complexity when it comes to the additional routing of the electrical energy storage modules interfaces, such as power, control, ground, and cooling. Furthermore, the batteries in electrical vehicles, and especially in cargo transport vehicles, are often very large and heavy. Therefore, a secure and efficient way of mounting these battery systems to the vehicle frame is needed. The mounting solution should be production friendly on an assembly line where the time spent on each station is limited.

An object of the present disclosure is to provide an improved electrical energy storage system which can be adapted to different types of electric vehicles and which is easily assembled on the vehicle during manufacturing.

### SUMMARY

An object of the present disclosure is to provide an improved modular electrical Energy Storage System for powering an electric motor in a vehicle. A further object of the disclosure is to provide an improved method for providing electrical energy to an electric motor of a vehicle and a vehicle comprising an electric motor and the modular electrical Energy Storage System for powering the electric motor.

This and other objects may be achieved by a modular electrical Energy Storage System according to claim 1, a method for providing electrical energy to an electric motor of a vehicle according to claim 14 and a vehicle according to claim 16

Further advantages and advantageous features of the invention are disclosed in the following description and in the dependent claims.

According to a first aspect of the invention, the present disclosure relates to a modular electrical Energy Storage System (ESS) structure for powering an electric motor in a vehicle. The modular ESS structure comprises two or more electrical energy storage modules. The modular ESS structure extends in a longitudinal direction, in a transverse direction, and in a vertical direction, the longitudinal direction coinciding with a driving direction of the vehicle. The two or more electrical energy storage modules are arranged side-by-side in the transverse direction, in the longitudinal direction, and/or in the vertical direction and are connected to each other structurally and electrically. The two or more electrical energy storage modules are structurally connected to each other via a support frame that comprises a first mounting interface comprising one or more first connecting members configured for mounting to a vehicle structure. Each of the two or more electrical energy storage modules is structurally connected to an adjacent electrical energy storage module via direct mechanical connections between each adjacent electrical energy storage module.

The two or more electrical energy storage modules may comprise an electrical connection interface configured for electrically connecting adjacent electrical energy storage modules.

One of the main challenges of electrical vehicles of today is to accommodate enough batteries to provide a satisfactory driving range. A further challenge is to increase production capacity by decreasing the assembly time in factory. One of the issues creating extending assembly time is the very large numbers of mechanical, electrical, pneumatic and cooling connections needed between electrical energy storage modules. The modular ESS structure comprising two or more electrical energy storage modules being arranged side-by-side in the transverse direction and/or in the longitudinal direction and which are connected to each other structurally and electrically according to the present disclosure provides a compact, simplified structure with a reduced complexity in terms of mechanical, electrical, pneumatic and cooling connections needed between the electrical energy storage modules.

The side walls of the electrical energy storage modules provide structural integrity, which is an advantage. The side walls of the modular ESS structure act as structural elements of the modular ESS structure. The support frame of the modular ESS structure comprises a first mounting interface comprising one or more first connecting members for attaching the modular ESS structure to a vehicle frame, which provides a robust fastening arrangement.

The first mounting interface may be an intermediate bracket comprising the one or more first connecting elements. The first mounting interface may comprise two or more, three or more, four or more or five or more first connecting elements.

The modular ESS structure may for example comprise three, four, five, six, seven, eight, nine or ten electrical energy storage modules.

Each of the two or more electrical energy storage modules may comprise a cooling system connection interface configured for connecting adjacent electrical energy storage modules for cooling of the two or more electrical energy storage modules. The cooling system connection interfaces may be arranged between the adjacent electrical energy storage modules with the connections passing through the respective side walls, either being side walls, as seen in the transverse, longitudinal direction and/or vertical direction. This provides protection for the connection being protected by the outer surface of the modular ESS structure. However, the cooling system connection interfaces may alternatively be arranged to extend between electrical energy storage modules with connections being arranged on outwardly facing walls of the electrical energy storage modules. The modular ESS structure may comprise a common vehicle cooling system interface, allowing the vehicle to interface with the modular ESS structure instead of with each of the electrical energy storage modules separately.

Each of the two or more electrical energy storage modules may comprise an air pressure connection interface configured for connecting adjacent electrical energy storage modules. The air pressure connection interfaces may be arranged between the adjacent electrical energy storage modules with the connections passing through the respective side walls, either being transverse or longitudinal side walls, such as inner longitudinal side walls or upper or bottom side walls, if the electrical energy storage modules are arranged side-by-side, as seen in a vertical direction. This provides protection for the connection being protected by the outer surface of the modular ESS structure. However, the air pressure connection interfaces may alternatively be arranged to extend between electrical energy storage modules with connections being arranged on outwardly facing walls of the electrical energy storage modules. The modular ESS structure may comprise a common vehicle air pressure connection interface, which reduces the amount of connections and allows the vehicle to interface with one structure only.

Each of the two or more electrical energy storage modules is structurally connected to an adjacent electrical energy storage module via direct mechanical connection between each adjacent electrical energy storage module and/or via direct mechanical connections between each adjacent electrical energy storage module. This implies that the modular ESS structure may use the internal structure of the electrical energy storage modules to carry the loads or they may be mounted onto separate intermediate brackets for providing an additional support. The amount of components needed and the mounting time may in each of the alternatives be reduced compared to a frame structure and a durable and space efficient structure may be provided. The intermediate brackets may act both as interface between the electrical energy storage modules as well as structural support.

The support frame configuration allows easy assembly and disassembly of the electrical energy storage modules. This is an advantage both upon assembly of the modular ESS structure and if one or several electrical energy storage modules needs maintenance or reparation after mounting it to the vehicle structure.

The support frame may comprise a bottom plate providing structural support to a bottom side of the modular ESS structure.

The support frame may comprise one or more transverse bottom members extending in the transverse direction of the modular ESS structure, the one or more transverse bottom members providing structural support to a bottom side of the modular ESS structure.

The support frame may comprise one or more side protecting members providing protection and support to a first and/or second longitudinal side of the modular ESS structure, the first and second longitudinal sides extending in the longitudinal direction of the modular ESS structure. The first and/or second longitudinal side of the modular ESS structure are thus oriented in the vehicle driving direction and the side protecting members provide protection in a direction being perpendicular to the driving direction.

A support frame provided with side protecting members may provide protection and support to a first and/or second longitudinal side of the modular ESS structure, such as upon collisions.

The modular ESS structure may comprise a common vehicle electric interface configured to connect the two or more electrical energy storage modules to the electric motor of the vehicle. This allows the vehicle to interface with the modular ESS structure instead of with each of the electrical energy storage modules separately.

The modular ESS structure may comprise a second mounting interface comprising one or more second connector elements.

The second mounting interface may be an intermediate bracket comprising the one or more second connecting elements. The second mounting interface may comprise two or more, three or more, four or more or five or more second connecting elements.

The first mounting interface may be arranged to face the second mounting interface, such that they are configured to be mounted to a respective opposite side of the vehicle structure. Such mounting arrangement may provide an enhanced structural integrity to the modular ESS structure and a robust fastening arrangement.

The modular ESS structure may be a pre-assembled modular ESS structure.

According to a second aspect, the present disclosure relates to a method for providing electrical energy to an electric motor of a vehicle, the method comprising;
- providing a modular electrical Energy Storage System structure comprising two or more electrical energy storage modules being arranged side-by-side in the transverse direction and/or longitudinal direction and being connected to each other structurally and electrically such that each of the two or more electrical energy storage modules is structurally connected to an adjacent electrical energy storage module via a support frame, and direct mechanical connections between each adjacent electrical energy storage module, the support frame of the modular ESS structure comprising a first mounting interface comprising first connecting members configured for mounting to a vehicle structure;
- mounting the pre-assembled modular ESS structure to a vehicle structure by connecting the first mounting interface of the modular ESS structure to the vehicle structure, and;
- connecting the modular ESS structure to the electric motor of the vehicle via a common vehicle electric interface for providing electrical energy to the electric motor of the vehicle .

The modular ESS structure may be a modular ESS structure according to the first aspect. According to a third aspect, the present disclosure relates to a vehicle comprising an electric motor and an electrical Energy Storage System (ESS) according the first aspect.

The vehicle may be a cargo transport vehicle, a truck, a bus, a recreational vehicle and a construction equipment vehicle.

### BRIEF DESCRIPTION OF THE DRAWINGS

With reference to the appended drawings, below follows a more detailed description of embodiments of the invention cited as examples.

In the drawings:
Fig. 1 is a perspective view of an electrical Energy Storage System (ESS) mounted to a vehicle structure according to the present disclosure;
Fig. 2 is a perspective view of an electrical Energy Storage System according to the present disclosure; and
Figs. 3 is an exploded view of the electrical Energy Storage System illustrated in Fig. 2.

### DETAILED DESCRIPTION OF EXAMPLE EMBODIMENTS OF THE INVENTION

It is to be understood that the present invention is not limited to the embodiments described above and illustrated in the drawings; rather, the skilled person will recognize that many changes and modifications may be made within the scope of the appended claims.

The present disclosure presents a modular electrical Energy Storage System (ESS) which can be adapted to different energy capacity needs and vehicle frame geometries. The proposed modular ESS is scalable in that it comprises electrical energy storage modules which can be assembled as needed into a suitable modular ESS structure having physical dimensions to fit a given vehicle frame, while providing required electrical power and energy capacity.

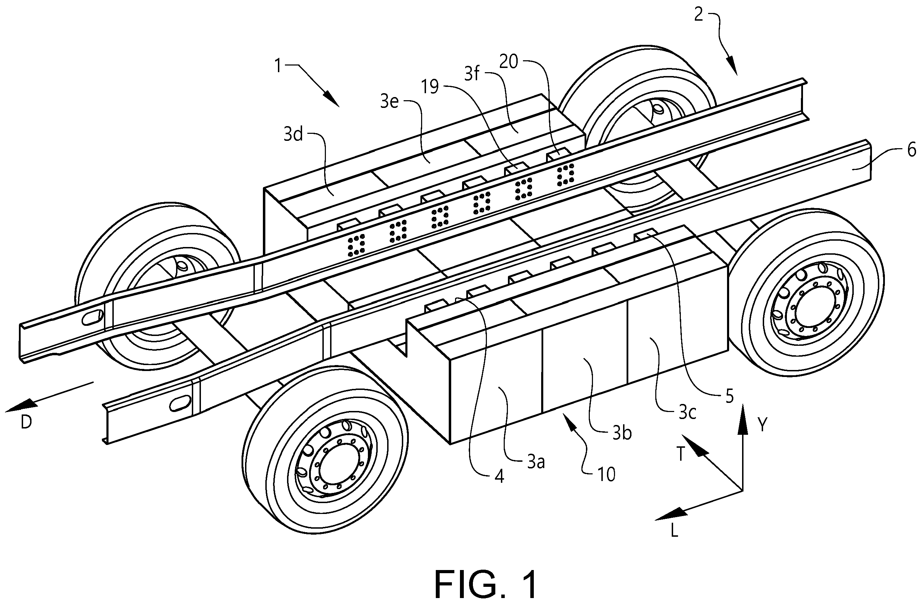

Figure 1 is a schematic illustration of a vehicle 2 having a modular electrical Energy Storage System (ESS) structure 1 mounted to a vehicle structure 6 of the vehicle 2. The modular electrical ESS structure 1 is mounted to the vehicle 1 for powering an electric motor in the vehicle 2. The modular ESS structure 1 comprises a plurality of electrical energy storage modules 3a,3b,3c,3d,3e,3f. The number of modules determine the electrical energy storage capacity and a required capacity can be obtained by selecting a suitable number of modules for the intended vehicle.

The modular ESS structure 1 extends in a longitudinal direction L, in a transverse direction T and in a vertical direction Y, as seen when the modular ESS structure is mounted to a vehicle positioned on a flat horizontally extending surface. The longitudinal direction L coincides with a driving direction D of the vehicle 2. The electrical energy storage modules 3a,3b,3c,3d,3e,3f are arranged side-by-side. The electrical energy storage modules 3a,3b,3c,3d,3e,3f each comprises first and second opposite transverse side walls, with at least one of the first and second transverse side walls arranged to face a transverse side wall of adjacent modules and to provide structural integrity of the modular electrical ESS structure 1. In this figure, the electrical energy storage modules 3a,3b,3c,3d,3e,3f are arranged in two rows, as seen in the longitudinal direction L, a first row including the electrical energy storage modules 3a,3b,3c and the second row including the electrical energy storage modules 3d,3e,3f. The electrical storage module 3a is arranged such that an inner longitudinal side wall thereof faces an inner longitudinal side wall of the electrical storage module 3d, the electrical storage module 3b is arranged such that an inner longitudinal side wall thereof faces an inner longitudinal side wall of the electrical storage module 3e and the electrical storage module 3c is arranged such that an inner longitudinal side wall thereof faces an inner longitudinal side wall of the electrical storage module 3f. Hence, each of the electrical energy storage modules 3a,3b,3c,3d,3e,3f are arranged side-to-side with at least two of the other the electrical energy storage modules 3a,3b,3c,3d,3e,3f.

The electrical energy storage modules 3a,3b,3c,3d,3e,3f are built by battery cells, multiple battery cells are stacked forming a battery module and multiple battery modules are then stacked forming the electrical energy storage modules 3a,3b,3c,3d,3e,3f. The electrical energy storage modules 3a,3b,3c,3d,3e,3f may furthermore each include a battery management system. The electrical energy storage modules 3a,3b,3c,3d,3e,3f may be connected in series or in parallel. The electrical connection between the electrical energy storage modules may be configurable between serial electrical connection of electrical energy storage modules and parallel electrical connection electrical energy storage modules. This means that the output voltage of the ESS structure is selectable by configuration of the connection, which is an advantage. For instance, two electrical energy storage modules may be configured in series to double the output voltage, or in parallel to maintain the voltage of the individual modules.

The modular ESS structure 1 comprises a first mounting interface 4 comprising a plurality of first connecting members 5 configured for mounting to the vehicle structure 6 and a second mounting interface 19 comprising a plurality of second connector elements 20 configured for mounting to the vehicle structure 6. The electrical energy storage modules 3a,3b,3c,3d,3e,3f are each mechanically connected to an adjacent electrical energy storage modules 3a,3b,3c,3d,3e,3f. In this figure 1, the electrical energy storage modules 3a,3b,3c,3d,3e,3f are structurally connecter to each other via a support frame 10. The modular ESS structure may however also or alternatively be mechanically connected to each other between each adjacent electrical energy storage module 3a,3b,3c,3d,3e,3f, such as for example via intermediate brackets arranged in-between each adjacent electrical energy storage modules 3a,3b,3c,3d,3e,3f and/or via direct mechanical connections between each adjacent electrical energy storage module 3a,3b,3c,3d,3e,3f. Intermediate brackets arranged between each adjacent electrical energy storage modules 3a,3b,3c,3d,3e,3f may be secured to the side walls of the electrical energy storage modules 3a,3b,3c,3d,3e,3f. The walls of the electrical energy storage modules 3a,3b,3c,3d,3e,3f may be made of a structurally supporting material, such as hard plastic or metal. Such structurally supporting material makes the modular structure robust, with a high tolerance to some mechanical stress. The structurally supporting side walls may provide collision protection, which protects electrical energy storage modules from mechanical stress during a collision.

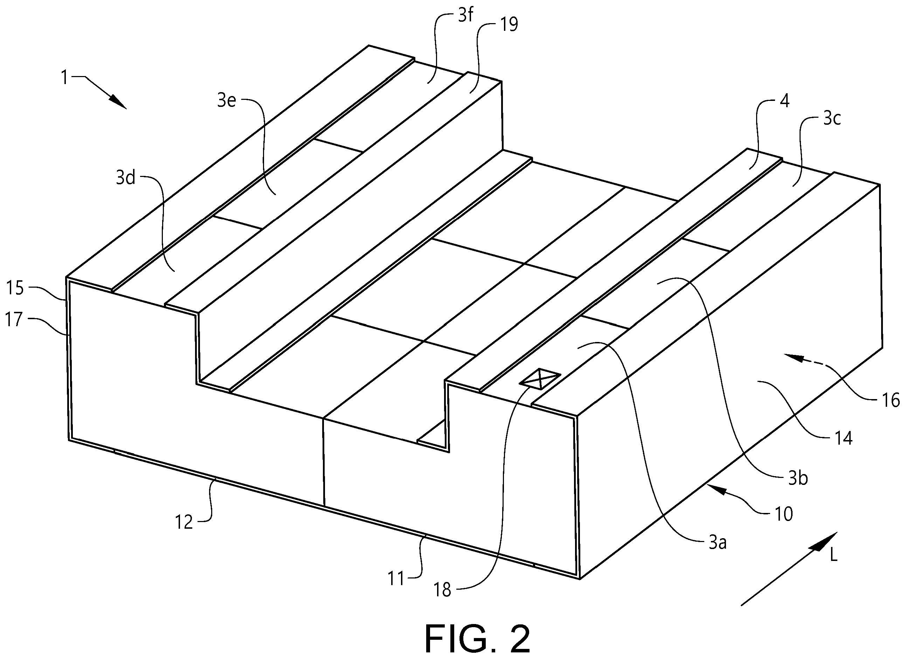

Figure 2 is a schematic illustration of the modular ESS structure 1 according to the present disclosure comprising electrical energy storage modules 3a,3b,3c,3d,3e,3f. The modular ESS structure comprises a first longitudinal side 16 and a second longitudinal side 17, extending in the longitudinal direction L. The modular ESS structure also comprises a bottom side 12. The electrical energy storage modules 3a,3b,3c,3d,3e,3f are structurally connected by means of a support frame 10. The support frame 10 comprises a bottom plate 11 providing structural support to the bottom side 12 of the modular ESS structure 1. The support frame 10 further comprises side protecting members 14,15 providing protection and support to the first and second longitudinal sides 16,17 of the modular ESS structure 1. The electrical energy storage modules 3a,3b,3c,3d,3e,3f are also connected to each other electrically with electrical connection interfaces between the adjacent modules 3a,3b,3c,3d,3e,3f. The modular ESS structure 1 furthermore comprises a common vehicle electric interface 18 configured to connect the electrical energy storage modules 3a,3b,3c,3d,3e,3f to the electric motor of the vehicle 2. This means that there is a common electrical contact between the modular ESS structure 1 with respect to the electrical motor of the vehicle 2 (not shown). This simplifies the design of the vehicle and is advantageous in terms of space and mounting of the modular ESS structure 1.

For facilitated connection to a vehicle structure 6, the pre-assembled modular ESS structure 1 is provided with a first mounting interface 4 and a second mounting interface 19, the mounting interfaces 4,19 are provided on opposing sides of the modular ESS structure 1 and are facing each other. The first and second mounting interfaces 4,19 comprise connecting members configured for mounting to a vehicle structure.

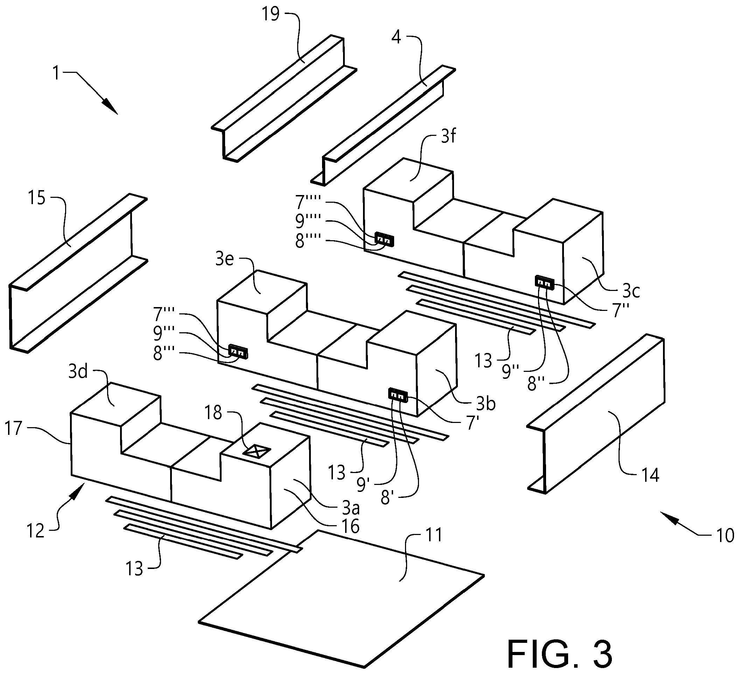

Figure 3 is an exploded view of the modular ESS structure 1 from figure 2. As illustrated in this figure, the modular ESS structure 1 comprises six electrical energy storage modules 3a,3b,3c,3d,3e,3f. The electrical energy storage modules 3a,3b,3c,3d,3e,3f are structurally connected via a frame 10. The support frame 10 comprises the bottom plate 11 extending under the entire bottom side 12 of the modular ESS structure 1 and providing structural support to the bottom side 12. Between the bottom plate 11 and the bottom side 12 of the modular ESS structure a plurality of transverse bottom members 13 extend in the transverse direction of the modular ESS structure 1 for providing, the two or additional structural support to the bottom side 12 of the modular ESS structure 1. The support frame 10 further comprises the side protecting members 14,15 providing protection and support to the first and second longitudinal sides 16,17 of the modular ESS structure 1 in a direction perpendicular to the driving direction of the vehicle (shown in figure 1).

The electrical energy storage modules 3a,3b,3c,3d,3e,3f are furthermore connected to each other electrically with electrical connection interfaces 7',7",7‴,7ʺʺ between the adjacent modules 3a,3b,3c,3d,3e,3f. The electrical energy storage modules 3a,3b,3c,3d,3e,3f further comprises cooling system connection interfaces 8',8",8‴,8ʺʺ configured for connecting the adjacent electrical energy storage modules 3a,3b,3c,3d,3e,3f for cooling of the electrical energy storage modules 3a,3b,3c,3d,3e,3f.

The electrical energy storage modules 3a,3b,3c,3d,3e,3f further comprises air pressure connection interface 9',9",9‴,9ʺʺ configured for connecting the adjacent electrical energy storage modules 3a,3b,3c,3d,3e,3f.

The modular ESS structure 1 furthermore comprises a common vehicle electric interface 18 configured to connect the electrical energy storage modules 3a,3b,3c,3d,3e,3f to the electric motor of the vehicle 2, this means that there is a common electrical contact between the modular ESS structure 1 with respect to the electrical motor of the vehicle. This simplifies the design of the vehicle and is advantageous in terms of space and mounting of the modular ESS structure 1.

## Claims

1. A modular electrical Energy Storage System (ESS) structure (1) for powering an electric motor in a vehicle (2), the modular ESS structure (1) comprising two or more electrical energy storage modules (3a,3b,3c,3d,3e,3f), the modular ESS structure (1) extending in a longitudinal direction (L), in a transverse direction (T) and in a vertical direction (Y), the longitudinal direction (L) coinciding with a driving direction (D) of the vehicle (2), the two or more electrical energy storage modules (3a,3b,3c,3d,3e,3f) are arranged side-by-side in the transverse direction (T), in the longitudinal direction (L) and/or in the vertical direction (Y) and are connected to each other structurally and electrically, **characterized in that** the two or more electrical energy storage modules are structurally connected to each other via a support frame (10) comprising a first mounting interface (4) comprising one or more first connecting members (5) configured for mounting to a vehicle structure (6) and that each of the two or more electrical energy storage modules (3a,3b,3c,3d,3e,3f) is structurally connected to an adjacent electrical energy storage module (3a,3b,3c,3d,3e,3f) via direct mechanical connections between each adjacent electrical energy storage module (3a,3b,3c,3d,3e,3f).

2. The modular ESS structure (1) according to claim 1, wherein each of the two or more electrical energy storage modules (3a,3b,3c,3d,3e,3f) comprises an electrical connection interface (7',7",7"',7"") configured for electrically connecting adjacent electrical energy storage modules (3a,3b,3c,3d,3e,3f).

3. The modular ESS structure (1) according to claim 1 or 2, wherein each of the two or more electrical energy storage modules (3a,3b,3c,3d,3e,3f) comprises a cooling system connection interface (8',8",8"',8"") configured for connecting adjacent electrical energy storage modules (3a,3b,3c,3d,3e,3f) for cooling of the two or more electrical energy storage modules (3a,3b,3c,3d,3e,3f).

4. The modular ESS structure (1) according to claim 3, wherein the modular ESS structure (1) comprises a common vehicle cooling system interface.

5. The modular ESS structure (1) according to any one of the preceding claims, wherein each of the two or more electrical energy storage modules (3a,3b,3c,3d,3e,3f) comprises an air pressure connection interface (9',9",9"',9"") configured for connecting adjacent electrical energy storage modules (3a,3b,3c,3d,3e,3f).

6. The modular ESS structure (1) according to claim 5, wherein the modular ESS structure (1) comprises a common vehicle air pressure connection interface.

7. The modular ESS structure (1) according to any one of the preceding claims, wherein the support frame (10) comprises a bottom plate (11) providing structural support to a bottom side (12) of the modular ESS structure (1).

8. The modular ESS structure (1) according to any one of the preceding claims, wherein the support frame (10) comprises one or more transverse bottom members (13) extending in the transverse direction (T) of the modular ESS structure (1), the one or more transverse bottom members (13) providing structural support to a bottom side (12) of the modular ESS structure (1).

9. The modular ESS structure (1) according to any one of the preceding claims, wherein the support frame (10) comprises one or more side protecting members (14,15) providing protection and support to a first and/or second longitudinal side (16,17) of the modular ESS structure (1), the first and second longitudinal sides (16,17) extending in the longitudinal direction (L) of the modular ESS structure (1).

10. The modular ESS structure (1) according to any one of the preceding claims, wherein the modular ESS structure (1) comprises a common vehicle electric interface (18) configured to connect the two or more electrical energy storage modules (3a,3b,3c,3d,3e,3f) to the electric motor of the vehicle (2).

11. The modular ESS structure (1) according to any one of the preceding claims, wherein the modular ESS structure comprises a second mounting interface (19) comprising one or more second connector elements (20).

12. The modular ESS structure (1) according to claim 11, wherein the first mounting interface (4) is arranged to face the second mounting interface (19), such that they are configured to be mounted to a respective opposite side of the vehicle structure (6).

13. The modular ESS structure (1) according to any one of the preceding claims, wherein the modular ESS structure (1) is a pre-assembled modular ESS structure.

14. A method for providing electrical energy to an electric motor of a vehicle (2), the method comprising the steps of;
- providing a modular electrical Energy Storage System (ESS) structure (1) comprising two or more electrical energy storage modules (3a,3b,3c,3d,3e,3f) being arranged side-by-side in the transverse direction (T) and/or longitudinal direction (L) and being connected to each other electrically and structurally such that each of the two or more electrical energy storage modules (3a,3b,3c,3d,3e,3f) is structurally connected to an adjacent electrical energy storage module (3a,3b,3c,3d,3e,3f) via a support frame (10) and direct mechanical connections between each adjacent electrical energy storage module (3a,3b,3c,3d,3e,3f), the support frame (10) of the modular ESS structure (1) comprising a first mounting interface (4) comprising first connecting members (5) configured for mounting to a vehicle structure (6);
- mounting the pre-assembled modular ESS structure (1) to a vehicle structure (6) by connecting the first mounting interface (4) of the modular ESS structure (1) to the vehicle structure (6), and;
- connecting the modular ESS structure (1) to the electric motor of the vehicle (2) via a common vehicle electric interface (18) for providing electrical energy to the electric motor of the vehicle (2).

15. The method according to claim 14, wherein the electrical ESS structure is an electrical ESS structure according any one of claims 1-13.

16. A vehicle (2) comprising an electric motor and an electrical Energy Storage System (ESS) according any one of claims 1-13.

## Patentansprüche

1. Modulare Struktur (1) eines elektrischen Energiespeichersystems (ESS) zur Stromversorgung eines Elektromotors in einem Fahrzeug (2), wobei die modulare ESS-Struktur (1) zwei oder mehrere elektrische Energiespeichermodule (3a, 3b, 3c, 3d, 3e, 3f) umfasst, wobei sich die modulare ESS-Struktur (1) in einer Längsrichtung (L), in einer Querrichtung (T) und in einer vertikalen Richtung (Y) erstreckt, wobei die Längsrichtung (L) mit einer Fahrtrichtung (D) des Fahrzeugs (2) übereinstimmt, wobei die zwei oder mehreren elektrischen Energiespeichermodule (3a, 3b, 3c, 3d, 3e, 3f) in der Querrichtung (T), in der Längsrichtung (L) und/oder in der vertikalen Richtung (Y) nebeneinander angeordnet und strukturell und elektrisch miteinander verbunden sind, **dadurch gekennzeichnet, dass** die zwei oder mehreren elektrischen Energiespeichermodule über einen Stützrahmen (10) strukturell miteinander verbunden sind, der eine erste Montageschnittstelle (4) umfasst, die ein oder mehrere erste Verbindungselemente (5) umfasst, die zum Montieren an einer Fahrzeugstruktur (6) konfiguriert sind, und dass jedes der zwei oder mehreren elektrischen Energiespeichermodule (3a, 3b, 3c, 3d, 3e, 3f) über direkte mechanische Verbindungen zwischen jedem benachbarten elektrischen Energiespeichermodul (3a, 3b, 3c, 3d, 3e, 3f) strukturell mit einem benachbarten elektrischen Energiespeichermodul (3a, 3b, 3c, 3d, 3e, 3f) verbunden ist.

2. Modulare ESS-Struktur (1) nach Anspruch 1, wobei jedes der zwei oder mehreren elektrischen Energiespeichermodule (3a, 3b, 3c, 3d, 3e, 3f) eine elektrische Verbindungsschnittstelle (7', 7'', 7‴, 7ʺʺ) umfasst, die zum elektrischen Verbinden benachbarter elektrischer Energiespeichermodule (3a, 3b, 3c, 3d, 3e, 3f) konfiguriert ist.

3. Modulare ESS-Struktur (1) nach Anspruch 1 oder 2, wobei jedes der zwei oder mehreren elektrischen Energiespeichermodule (3a, 3b, 3c, 3d, 3e, 3f) eine Kühlsystem-Verbindungsschnittstelle (8', 8'', 8‴, 8ʺʺ) umfasst, die zum Verbinden benachbarter elektrischer Energiespeichermodule (3a, 3b, 3c, 3d, 3e, 3f) konfiguriert ist, um die zwei oder mehreren elektrischen Energiespeichermodule (3a, 3b, 3c, 3d, 3e, 3f) zu kühlen.

4. Modulare ESS-Struktur (1) nach Anspruch 3, wobei die modulare ESS-Struktur (1) eine gemeinsame Fahrzeugkühlsystemschnittstelle umfasst.

5. Modulare ESS-Struktur (1) nach einem der vorhergehenden Ansprüche, wobei jedes der zwei oder mehreren elektrischen Energiespeichermodule (3a, 3b, 3c, 3d, 3e, 3f) eine Luftdruck-Verbindungsschnittstelle (9', 9'', 9‴, 9ʺʺ) umfasst, die zum Verbinden benachbarter elektrischer Energiespeichermodule (3a, 3b, 3c, 3d, 3e, 3f) konfiguriert ist.

6. Modulare ESS-Struktur (1) nach Anspruch 5, wobei die modulare ESS-Struktur (1) eine gemeinsame Luftdruck-Verbindungsschnittstelle des Fahrzeugs umfasst.

7. Modulare ESS-Struktur (1) nach einem der vorhergehenden Ansprüche, wobei der Stützrahmen (10) eine Bodenplatte (11) umfasst, die einer Unterseite (12) der modularen ESS-Struktur (1) eine strukturelle Unterstützung bereitstellt.

8. Modulare ESS-Struktur (1) nach einem der vorhergehenden Ansprüche, wobei der Stützrahmen (10) eine oder mehrere querverlaufende Bodenelemente (13) umfasst, die sich in der Querrichtung (T) der modularen ESS-Struktur (1) erstreckt, wobei das eine oder die mehreren querverlaufenden Bodenelemente (13) einer Unterseite (12) der modularen ESS-Struktur (1) eine strukturelle Unterstützung bereitstellen.

9. Modulare ESS-Struktur (1) nach einem der vorhergehenden Ansprüche, wobei der Stützrahmen (10) ein oder mehrere Seitenschutzelemente (14, 15) umfasst, die einer ersten und/oder einer zweiten Längsseite (16, 17) der modularen ESS-Struktur (1) Schutz und Unterstützung bereitstellen, wobei sich die erste und die zweite Längsseite (16, 17) in der Längsrichtung (L) der modularen ESS-Struktur (1) erstrecken.

10. Modulare ESS-Struktur (1) nach einem der vorhergehenden Ansprüche, wobei die modulare ESS-Struktur (1) eine gemeinsame elektrische Fahrzeugschnittstelle (18) umfasst, die dazu konfiguriert ist, die zwei oder mehreren elektrischen Energiespeichermodule (3a, 3b, 3c, 3d, 3e, 3f) mit dem Elektromotor des Fahrzeugs (2) zu verbinden.

11. Modulare ESS-Struktur (1) nach einem der vorhergehenden Ansprüche, wobei die modulare ESS-Struktur eine zweite Montageschnittstelle (19) umfasst, die ein oder mehrere zweite Verbindungselemente (20) umfasst.

12. Modulare ESS-Struktur (1) nach Anspruch 11, wobei die erste Montageschnittstelle (4) so angeordnet ist, dass sie derart der zweiten Montageschnittstelle (19) zugewandt ist, dass sie konfiguriert sind, an einer jeweiligen gegenüberliegenden Seite der Fahrzeugstruktur (6) montiert zu werden.

13. Modulare ESS-Struktur (1) nach einem der vorhergehenden Ansprüche, wobei die modulare ESS-Struktur (1) eine vorgefertigte modulare ESS-Struktur ist.

14. Verfahren zum Bereitstellen von elektrischer Energie an einen Elektromotor eines Fahrzeugs (2), wobei das Verfahren die folgenden Schritte umfasst:
- Bereitstellen einer modularen Struktur (1) eines elektrischen Energiespeichersystem (ESS), die zwei oder mehr elektrische Energiespeichermodule (3a, 3b, 3c, 3d, 3e, 3f) umfasst, die in der Querrichtung (T) und/oder in der Längsrichtung (L) nebeneinander angeordnet und strukturell und elektrisch derart miteinander verbunden sind, dass jedes der zwei oder mehreren elektrischen Energiespeichermodule (3a, 3b, 3c, 3d, 3e, 3f) über einen Stützrahmen (10) und direkte mechanische Verbindungen zwischen jedem benachbarten elektrischen Energiespeichermodul (3a, 3b, 3c, 3d, 3e, 3f) strukturell mit einem benachbarten elektrischen Energiespeichermodul (3a, 3b, 3c, 3d, 3e, 3f) verbunden ist, wobei der Stützrahmen (10) der modularen ESS-Struktur (1) eine erste Montageschnittstelle (4) umfasst, die erste Verbindungselemente (5) umfasst, die zum Montieren an einer Fahrzeugstruktur (6) konfiguriert sind;
- Montieren der vorgefertigten modularen ESS-Struktur (1) an einer Fahrzeugstruktur (6) durch das Verbinden der ersten Montageschnittstelle (4) der modularen ESS-Struktur (1) mit der Fahrzeugstruktur (6), und
- Verbinden der modularen ESS-Struktur (1) mit dem Elektromotor des Fahrzeugs (2) über eine gemeinsame elektrische Fahrzeugschnittstelle (18), um dem Elektromotor des Fahrzeugs (2) elektrische Energie bereitzustellen.

15. Verfahren nach Anspruch 14, wobei die elektrische ESS-Struktur eine elektrische ESS-Struktur nach einem der Ansprüche 1-13 ist.

16. Fahrzeug (2), das einen Elektromotor und ein elektrisches Energiespeichersystem (ESS) nach einem der Ansprüche 1-13 umfasst.

## Revendications

1. Structure modulaire de système de stockage d'énergie électrique (ESS) (1) pour alimenter un moteur électrique dans un véhicule (2), la structure modulaire ESS (1) comprenant au moins deux modules de stockage d'énergie électrique (3a, 3b, 3c, 3d, 3e, 3f), la structure modulaire ESS (1) s'étendant dans une direction longitudinale (L), dans une direction transversale (T) et dans une direction verticale (Y), la direction longitudinale (L) coïncidant avec une direction (D) de conduite du véhicule (2), les deux ou plusieurs modules de stockage d'énergie électrique (3a, 3b, 3c, 3d, 3e, 3f) étant disposés côte à côte dans la direction transversale (T), dans la direction longitudinale (L) et/ou dans la direction verticale (Y) et étant reliés entre eux structurellement et électriquement,
**caractérisée en ce que** les deux ou plusieurs modules de stockage d'énergie électrique sont structurellement reliés les uns aux autres par l'intermédiaire d'un cadre de support (10) comprenant une première interface de montage (4) comprenant un ou plusieurs premiers éléments de connexion (5) configurés pour être montés sur une structure de véhicule (6) et **en ce que** chacun des deux ou plusieurs modules de stockage d'énergie électrique (3a, 3b, 3c, 3d, 3e, 3f) est structurellement relié à un module de stockage d'énergie électrique adjacent (3a, 3b, 3c, 3d, 3e, 3f) par l'intermédiaire de connexions mécaniques directes entre chaque module de stockage d'énergie électrique adjacent (3a, 3b, 3c, 3d, 3e, 3f).

2. Structure ESS modulaire (1) selon la revendication 1, dans laquelle chacun des deux ou plusieurs modules de stockage d'énergie électrique (3a, 3b, 3c, 3d, 3e, 3f) comprend une interface de connexion électrique (7', 7", 7‴, 7ʺʺ) configurée pour connecter électriquement des modules adjacents de stockage d'énergie électrique (3a, 3b, 3c, 3d, 3e, 3f).

3. Structure ESS modulaire (1) selon la revendication 1 ou 2, dans laquelle chacun des deux ou plusieurs modules de stockage d'énergie électrique (3a, 3b, 3c, 3d, 3e, 3f) comprend une interface de connexion de système de refroidissement (8', 8", 8‴, 8ʺʺ) configurée pour connecter des modules de stockage d'énergie électrique adjacents (3a, 3b, 3c, 3d, 3e, 3f) pour refroidir les deux ou plusieurs modules de stockage d'énergie électrique (3a, 3b, 3c, 3d, 3e, 3f).

4. Structure ESS modulaire (1) selon la revendication 3, la structure ESS modulaire (1) comprenant une interface commune de système de refroidissement de véhicule.

5. Structure ESS modulaire (1) selon l'une quelconque des revendications précédentes, dans laquelle chacun des deux ou plusieurs modules de stockage d'énergie électrique (3a, 3b, 3c, 3d, 3e, 3f) comprend une interface de connexion à pression d'air (9', 9", 9‴, 9ʺʺ) configurée pour connecterdes modules de stockage d'énergie adjacents (3a, 3b, 3c, 3d, 3e, 3f).

6. Structure ESS modulaire (1) selon la revendication 5, dans laquelle la structure ESS modulaire (1) comprend une interface commune de connexion de pression d'air de véhicule.

7. Structure ESS modulaire (1) selon l'une quelconque des revendications précédentes, dans laquelle le cadre de support (10) comprend une plaque inférieure (11) procurant un support structurel à un côté inférieur (12) de la structure ESS modulaire (1).

8. Structure ESS modulaire (1) selon l'une quelconque des revendications précédentes, dans laquelle le cadre de support (10) comprend un ou plusieurs éléments inférieurs transversaux (13) s'étendant dans la direction transversale (T) de la structure ESS modulaire (1), l'élément ou les éléments inférieurs transversaux (13) procurant un support structurel à un côté inférieur (12) de la structure ESS modulaire (1).

9. Structure ESS modulaire (1) selon l'une quelconque des revendications précédentes, dans laquelle le cadre de support (10) comprend un ou plusieurs éléments de protection latéraux (14, 15) procurant une protection et un support à un premier et/ou un second côté longitudinal (16, 17) de la structure ESS modulaire (1), les premier et second côtés longitudinaux (16, 17) s'étendant dans la direction longitudinale (L) de la structure ESS modulaire (1).

10. Structure ESS modulaire (1) selon l'une quelconque des revendications précédentes, la structure ESS modulaire (1) comprenant une interface électrique de véhicule commune (18) configurée pour connecter les deux ou plusieurs modules de stockage d'énergie électrique (3a, 3b, 3c, 3d, 3e, 3f) au moteur électrique du véhicule (2).

11. Structure ESS modulaire (1) selon l'une quelconque des revendications précédentes, la structure ESS modulaire comprenant une seconde interface de montage (19) comprenant un ou plusieurs seconds éléments connecteurs (20).

12. Structure ESS modulaire (1) selon la revendication 11, dans laquelle la première interface de montage (4) est agencée pour faire face à la seconde interface de montage (19), de sorte qu'elles soient configurées pour être montées sur un côté opposé respectif de la structure de véhicule (6).

13. Structure ESS modulaire (1) selon l'une quelconque des revendications précédentes, la structure ESS modulaire (1) étant une structure ESS modulaire préassemblée.

14. Procédé pour fournir de l'énergie électrique à un moteur électrique d'un véhicule (2), le procédé comprenant les étapes suivantes :
- prévision d'une structure modulaire de système de stockage d'énergie électrique (ESS) (1) comprenant au moins deux modules de stockage d'énergie électrique (3a, 3b, 3c, 3d, 3e, 3f) disposés côte à côte dans la direction transversale (T) et/ou longitudinale (L) et reliés les uns aux autres électriquement et structurellement de telle sorte que chacun des deux ou plusieurs modules de stockage d'énergie électrique (3a, 3b, 3c, 3d, 3e, 3f) soit relié structurellement à un module de stockage d'énergie électrique adjacent (3a, 3b, 3c, 3d, 3e, 3f) par l'intermédiaire d'un cadre de support (10) et de connexions mécaniques directes entre chaque module de stockage d'énergie électrique adjacent (3a, 3b, 3c, 3d, 3e, 3f), le cadre de support (10) de la structure modulaire ESS (1) comprenant une première interface de montage (4) comprenant des premiers éléments de connexion (5) configurés pour être monté sur une structure de véhicule (6) ;
- montage de la structure ESS modulaire préassemblée (1) sur une structure de véhicule (6) en reliant la première interface de montage (4) de la structure ESS modulaire (1) à la structure de véhicule (6), et
- connexion de la structure ESS modulaire (1) au moteur électrique du véhicule (2) via une interface électrique commune (18) du véhicule pour fournir de l'énergie électrique au moteur électrique du véhicule (2).

15. Procédé selon la revendication 14, dans lequel la structure ESS électrique est une structure ESS électrique selon l'une quelconque des revendications 1 à 13.

16. Véhicule (2) comprenant un moteur électrique et un système de stockage d'énergie électrique (ESS) selon l'une quelconque des revendications 1 à 13.
